# EUROPÄISCHE PATENTANMELDUNG

(11) **EP 1 895 428 A2**
(43) Veröffentlichungstag der Anmeldung: **05.03.2008**
(21) Anmeldenummer: 07016186.4
(22) Anmeldetag: 17.08.2007
(51) Int. Cl.: G06F 13/40

(54) **Speicherverwaltungs-Schaltungsanordnung und Speicherverwaltungsverfahren**

(30) Priorität: 01.09.2006 DE 102006041306
(71) Anmelder: Micronas GmbH, 79108 Freiburg (DE)
(72) Erfinder: Herz, Ralf, 79111 Freiburg (DE); Rieckmann, Alf, 79106 Freiburg (DE); Wagner, Volker, 79111 Freiburg (DE); Proujanscy - Bell, Jonah, Lexington, MA 02420 (US)
(74) Vertreter: Modrow, Stephanie

(57) **Zusammenfassung**

Die Erfindung bezieht sich auf eine Speicherverwaltungs-Schaltungsanordnung mit einer Speichereinrichtung (MR), welche ansteuerbar ist zuerst eingegebene Daten (d) zuerst auszugeben und mit einer der Speichereinrichtung (MR) zugeordneten Speichersteuereinrichtung (C) zum Steuern des Eingebens der Daten (d) aus einer die Daten (d) bereitstellenden Einheit (D1) in die Speichereinrichtung (MR) und zum Steuern des Ausgebens der Daten aus der Speichereinrichtung zu einer die Daten empfangenden Einheit (D2), wobei die Speichersteuereinrichtung und die Speichereinrichtung (MR) in der Schaltungsanordnung als physikalisch getrennte Komponenten angeordnet sind und die Speichersteuereinrichtung (C) zum Steuern des Eingebens der Daten (d) und zum Steuern des Ausgebens der Daten mit der oder den die Daten bereitstellenden und die Daten empfangenden Einheit (D1, D2) verbunden ist.

## Beschreibung

Die Erfindung bezieht sich auf eine Speicherverwaltungs-Schaltungsanordnung mit den oberbegrifflichen Merkmalen gemäß Patentanspruch 1 bzw. auf ein Speicherverwaltungsverfahren mit den oberbegrifflichen Merkmalen gemäß Patentanspruch 8.

Zur Kommunikation in Systemen mit mehreren eigenständigen Verarbeitungseinheiten werden effiziente Wege zur Datenübertragung benötigt. Auch innerhalb einer einzigen Einheit mit einer einteiligen Schaltungsanordnung auf einer Platine und mehreren Datenverarbeitungseinheiten, Speichern etc. auf der Platine wird eine strukturierte Kommunikation zwischen logischen Routinen z. B. eines Prozessors angestrebt. Im Rahmen einer Datenübertragung müssen dabei Daten üblicherweise zwischengespeichert werden, wozu ein für verschiedene Verarbeitungseinrichtungen gemeinsamer Zugriffsspeicher verwendet wird. Mit einer solchen Anordnung lassen sich die Daten auf einfache Art und Weise in jede Richtung übertragen. Jedoch kann die Synchronisierung zwischen damit verbundenen Prozessen, beispielsweise einer Benachrichtigung über gesendete Daten, sehr aufwändig sein.

Werden die Daten nur in eine Richtung von einem Sender als einer ersten Einrichtung zu einem Empfänger als einer zweiten Einrichtung übertragen, werden oftmals Speichereinrichtungen verwendet, welche ansteuerbar sind, zuerst eingegebene Daten zuerst auszugeben, wobei solche Speichereinrichtungen üblicherweise als FIFO (First-In-First-Out) bezeichnet werden. Die sendende Einrichtung besitzt dabei einen Schreibanschluss, um Daten über diesen in einen Speicherbereich der Speichereinrichtung zu schreiben. Die empfangende Einrichtung besitzt einen Leseanschluss, um die in die Speichereinrichtung geschriebenen Daten in der gleichen Reihenfolge wieder auszulesen.

Zur Kommunikation zwischen Verarbeitungseinrichtungen in eingebetteten Systemen werden solche FIFO-Speichereinrichtungen mit einem integrierten Speicherbereich für eine feste Anzahl von FIFO-Elementen in einheitlicher Größe verwendet. Dieser Speicherbereich kann aus Registern oder bei größeren Datenmengen aus einem oder mehreren RAM-Blöcken (RAM: Random-Access-Memory / Direktzugriffsspeicher) bestehen. Die Daten werden dabei direkt in die FIFO-Speichereinrichtung geschrieben, in dieser gespeichert und durch den Empfänger wieder ausgelesen, wie dies bekannt ist aus US 4,151,609.

Bei der Verwendung eines RAM-Speichers ist das Weiterschieben der Daten von Zelle zu Zelle technisch nicht möglich. Deshalb wird eine solche Speichereinrichtung als Ringspeicher behandelt, in dem die Adresse zum Schreiben bzw. Lesen weiterwandert. Beim Erreichen des Speicherendes wird wieder zum Anfang gesprungen, wie dies bekannt ist aus US 4,803,654.

Ein großer Nachteil von FIFO-Speichereinrichtungen mit integriertem Speicherbereich ist die Notwendigkeit, die Größe des Speicherbereichs in der FIFO-Speichereinrichtung schon während der Entwurfsphase festzulegen. Eine spätere Veränderung der Größe der Speicherbereiche oder ein Umverteilen von Speicherbereichen zwischen FIFOs und anderen Daten oder verschiedenen FIFOs ist nicht möglich.

Eine FIFO-Speichereinrichtung kann auch ausschließlich software-basiert modelliert werden. Dies ist jedoch insbesondere dann mit erheblichem Aufwand verbunden, wenn Zugriffe von verschiedenen Verarbeitungseinheiten oder Verarbeitungseinrichtungen koordiniert werden müssen. Ohne unterstützende Hardware sind zur Sicherstellung der Konsistenz der FIFO-Speichereinrichtung rechenzeit-aufwändige Kontrollroutinen erforderlich.

Die Aufgabe der Erfindung besteht darin, eine Speicherverwaltungs-Schaltungsanordnung mit einer FIFO-Speichereinrichtung zu verbessern, insbesondere eine nachträgliche Anpassung an einen konkreten Speicherbereichsbedarf verwalten zu können. Außerdem soll ein Speicherverwaltungsverfahren vorgeschlagen werden, welches eine solche Schaltungsanordnung unterstützt.

Diese Aufgabe wird gelöst durch die Speicherverwaltungs-Schaltungsanordnung mit den Merkmalen gemäß Patentanspruch 1 bzw. durch ein Speicherverwaltungsverfahren mit den Merkmalen gemäß Patentanspruch 8. Vorteilhafte Ausgestaltungen sind Gegenstand abhängiger Ansprüche.

Bevorzugt wird eine Speicherverwaltungs-Schaltungsanordnung mit einer Speichereinrichtung, welche ansteuerbar ist zuerst eingegebene Daten zuerst auszugeben, und mit einer der Speichereinrichtung zugeordneten Speichersteuereinrichtung zum Steuern des Eingebens der Daten aus einer die Daten bereitstellenden Einheit in die Speichereinrichtung und zum Steuern des Ausgebens der Daten aus der Speichereinrichtung zu einer die Daten empfangenden Einheit, wobei die Speichersteuereinrichtung und die Speichereinrichtung in der Schaltungsanordnung als physikalisch getrennte Komponenten angeordnet sind und wobei die Speichersteuereinrichtung zum Steuern des Eingebens der Daten und zum Steuern des Ausgebens der Daten mit der oder den die Daten bereitstellenden und die Daten empfangenden Einheit verbunden ist.

Bevorzugt wird entsprechend auch ein Speicherverwaltungsverfahren zum Verwalten einer Speichereinrichtung, welche ansteuerbar ist zuerst eingegebene Daten zuerst auszugeben mittels einer der Speichereinrichtung zugeordneten Speichersteuereinrichtung, wobei ein Eingeben der Daten aus einer die Daten bereitstellenden Einheit in die Speichereinrichtung gesteuert wird und ein Ausgeben der Daten aus der Speichereinrichtung zu einer die Daten empfangenden Einheit gesteuert wird und wobei mittels der Speichersteuereinrichtung als einer von der Speichereinrichtung in der Schaltungsanordnung physikalisch getrennten Komponente direkt die Daten bereitstellende und/oder die Daten empfangende Einheit angesteuert wird zum Steuern des Eingebens der Daten in die Speichereinrichtung bzw. zum Steuern des Ausgebens der Daten aus der Speichereinrichtung.

Das vorrichtungsgemäße und das verfahrensgemäße Konzept basieren somit auf der physikalischen Trennung der Funktionalität einer bekannten FIFO-Speichereinrichtung mit integrierten Steuerkomponenten in einerseits eine FIFO-Speichersteuereinrichtung und andererseits eine davon getrennte eigentliche FIFO-Speichereinrichtung. In Wechselwirkung mit der Speichersteuereinrichtung können Einheiten, insbesondere baulich eigenständige Einrichtungen oder beispielsweise auch ein Softwareprozess oder eine DMA-Einheit (DMA: Direct Memory Access /Direktspeicherzugriff), die FIFO-Speichereinrichtung und den Zugriff auf Daten in dieser bzw. das Einspeichern von Daten in diese verwalten.

Die Speichersteuereinrichtung und die Speichereinrichtung sind in der Schaltungsanordnung vorzugsweise als physikalisch baulich getrennte Komponenten angeordnet. Dies ermöglicht eine Umsetzung unabhängig von einer im Speicherbaustein ggf. integrierten Speichersteuereinrichtung.

Die Speichersteuereinrichtung und die Speichereinrichtung sind zum Steuern des Eingebens der Daten und zum Steuern des Ausgebens der Daten nicht notwendig miteinander verbunden. Die Speichereinrichtung wird entsprechend von der Speichersteuereinrichtung nicht direkt angesteuert. Die erste und die zweite Einheit greifen entsprechend selber direkt auf den durch insbesondere eine von der Speichersteuereinrichtung mitgeteilte Adresse mitgeteilten Speicherbereich innerhalb der Speichereinrichtung zu. Für einen Zugriff der die Daten bereitstellenden Einheit und/oder der die Daten empfangenden Einheit auf die Speichereinrichtung überträgt die Speichersteuereinrichtung entsprechend eine Speicheradresse an die Daten bereitstellenden Einheit und/oder an die Daten empfangenden Einheit. Die Daten bereitstellende Einheit und/oder die Daten empfangende Einheit greifen auf die Speichereinrichtung an der Speicheradresse der Speichereinrichtung zu.

Die Speichersteuereinrichtung ist mit der die Daten bereitstellenden Einheit und/oder mit der die Daten empfangenden Einheit über einen Bus zum Übertragen einer Speicheradresse für einen Zugriff der die Daten bereitstellenden Einheit und/oder der die Daten empfangenden Einheit auf die Speichereinrichtung verbunden. [h1]

Die Speichereinrichtung weist bevorzugt einen Schreibanschluss zum Eingeben der Daten von der die Daten bereitstellenden Einheit als einer ersten Einheit und einen Ausleseanschluss zum Ausgeben der Daten an die Daten empfangende Einheit als einer zweiten Einheit auf.

Die Speichersteuereinrichtung weist bevorzugt eine Speichereinheit zum Speichern einer Adresse des zugeordneten Speicherbereichs der Speichereinrichtung in einem übergeordneten Speicher auf.

Die Speichersteuereinrichtung weist vorzugsweise eine Speichereinheit zum Speichern einer Größe des zugeordneten Speicherbereichs der Speichereinrichtung auf.

Für die Verwaltung des Speicherzugriffs kommunizieren die Daten bereitstellende Einheit und/oder die Daten empfangende Einheit über separate Kommunikationsverbindungen vorzugsweise direkt mit der Speichersteuereinrichtung.

Die Speichereinrichtung ist zum wahlweise dimensioniert großen Belegen eines Speicherbereichs innerhalb eines übergeordneten Speichers zum Bereitstellen der Speichereinrichtung bevorzugt skalierbar. Die Speichereinrichtung kann vorteilhaft in einem übergeordneten Speicher temporär bereitgestellt werden.

Die Implementierung der FIFO-Speichersteuereinrichtung als eine baulich eigenständige Komponente getrennt vom eigentlichen Datenspeicher in Form der Speichereinrichtung ermöglicht eine effiziente Hardware-Schaltungsanordnung mit mehreren Vorteilen.

Im Vergleich zu beispielsweise einer software-basierten Lösung in einem Prozessor arbeitet die auch von dem Prozessor baulich eigenständige Speichersteuereinrichtung wesentlich effizienter. Jeder Zugriff, welcher bei einer Software-Lösung viele Zyklen zum Laden des FIFO-Zustandes in der Speichereinrichtung, das Ausführen von Berechnungen und das Rückspeichern des geänderten Zustandes benötigt, wird durch die vorgeschlagene Speichersteuereinrichtung durch eine einzige Speicherzugriffsoperation von der Daten liefernden bzw. schreibenden bzw. von der Daten lesenden Einrichtung erledigt.

Neben der Effizienz stellt eine solche Atomarität von Zugriffen zu jeder Zeit die Konsistenz des FIFO-Zustandes sicher.

Besonders in Systemen mit mehreren Verarbeitungseinheiten ist kein zusätzlicher Aufwand für die Synchronisierung von Zugriffen auf die als FIFO-Kontrolleinrichtung ausgebildete Speichersteuereinrichtung notwendig. Gegenüber software-basierten Ansätzen, bei welchen die Synchronisierungs-Maßnahmen weitere signifikante Leistungseinbußen mit sich bringen können, ist dies ein weiterer markanter Vorteil.

Im Vergleich mit einer konventionellen Hardware-FIFO-Implementierung ist die FIFO-Speichersteuereinrichtung wesentlich flexibler, da der im System verfügbare Speicher zu jedem Zeitpunkt optimal auf verschiedene FIFO-Speichereinrichtungen und Verarbeitungseinheiten bzw. Verarbeitungseinrichtungen aufgeteilt werden kann.

Vorteilhaft kann für die FIFO-Speichereinrichtung als Datenspeicher ein ganzer oder auch nur ein Teil eines singulären linearen Speichers verwendet werden, insbesondere eines RAMs (Random Access Memory / Direktzugriffsspeicher) mit nur einem Lese-/Schreib-Anschluss als einzigem Port.

Bei Geräten mit einer Speicher-Hierarchie, das heißt Anordnungen mit mehreren und unter Umständen unterschiedlich großen Speicherbereichen im System, welche unterschiedlich schnell adressiert werden können, was gegebenenfalls auch von der Lokalität abhängt, sind Vorteile erzielbar. Bei solchen Geräten mit Speicher-Hierarchie kann die FIFO-Speichersteuereinrichtung FIFO-Daten in allen Speicherbereichen unterschiedlicher Lokalität also mit unterschiedlich schnellem Zugriff relativ zur anfordernden Einrichtung oder Einheit, konfliktfrei verwalten.

Ein Ausführungsbeispiel und Varianten dazu werden nachfolgend anhand der Zeichnung näher erläutert. Es zeigen:
- Fig. 1: ein Grundprinzip einer Aufteilung in eine FIFO-Speichersteuereinrichtung und eine FIFO-Speichereinrichtung in Verbindung mit zwei dazu externen Einheiten,
- Fig. 2-6: verschiedene Varianten dazu,
- Fig. 7: schematisch einen Aufbau und eine Verfahrensweise für einen Lesezugriff in einer solchen Speichersteuereinrichtung und
- Fig. 8: schematisch einen Aufbau und eine Verfahrensweise für einen Schreibzugriff in einer weiteren solchen Speichersteuereinrichtung.

Fig_{[h2]}. 1 zeigt schematisch das Grundkonzept einer bevorzugten Speicherverwaltungs-Schaltungsanordnung mit einer Speichereinrichtung MR, welche als ein Speicherbereich innerhalb eines übergeordneten Speichers M belegt ist. Alternativ könnte die Speichereinrichtung MR prinzipiell aber auch durch einen eigenständigen Speicherbaustein umgesetzt werden. Vorteilhaft sind jedoch Ausführungsformen, bei welchen die Speichereinrichtung MR durch einen hinsichtlich seiner Dimension auch noch nachträglich festlegbaren Speicherbereich in einem übergeordneten Speicher ausgebildet wird. Die Speichereinrichtung MR ist z. B. als eine FIFO Speichereinrichtung ausgebildet bzw. ansteuerbar, bei welcher zuerst eingegebene Daten d wieder zuerst ausgegeben werden.

Eine Speichersteuereinrichtung C dient dazu, Zugriffe auf die Speichereinrichtung MR zu steuern, dass zuerst eingegebene Daten d wieder zuerst ausgegeben werden. Die Speichersteuereinrichtung C ist jedoch als eine eigenständige Einheit ausgebildet und physikalisch von dem Speicherbereich MR getrennt. Anstelle eines üblichen FIFO-Speichers ist somit die FIFO-Funktionalität in einerseits die FIFO-Speichersteuereinrichtung C und andererseits die Speichereinrichtung MR als Datenspeicher getrennt.

Die Daten d werden von unabhängigen Einheiten D1, D2 zum Einspeichern angelegt bzw. zum Auslesen abgerufen. Bei diesen Einheiten kann es sich beispielsweise um einen Software-Prozess oder um eine DMA-Einheit handeln. Die Einheiten D1, D2 können prinzipiell auch als baulich getrennte Komponenten auf einer gemeinsamen Platine mit der Speichersteuereinrichtung C und der Speichereinrichtung MR bzw. dem Speicher M angeordnet sein. Die Einheiten D1, D2 können aber auch als eigenständige externe Komponenten vorgesehen werden, welche über eine Kommunikationsverbindung mit den übrigen Komponenten kommunizieren.

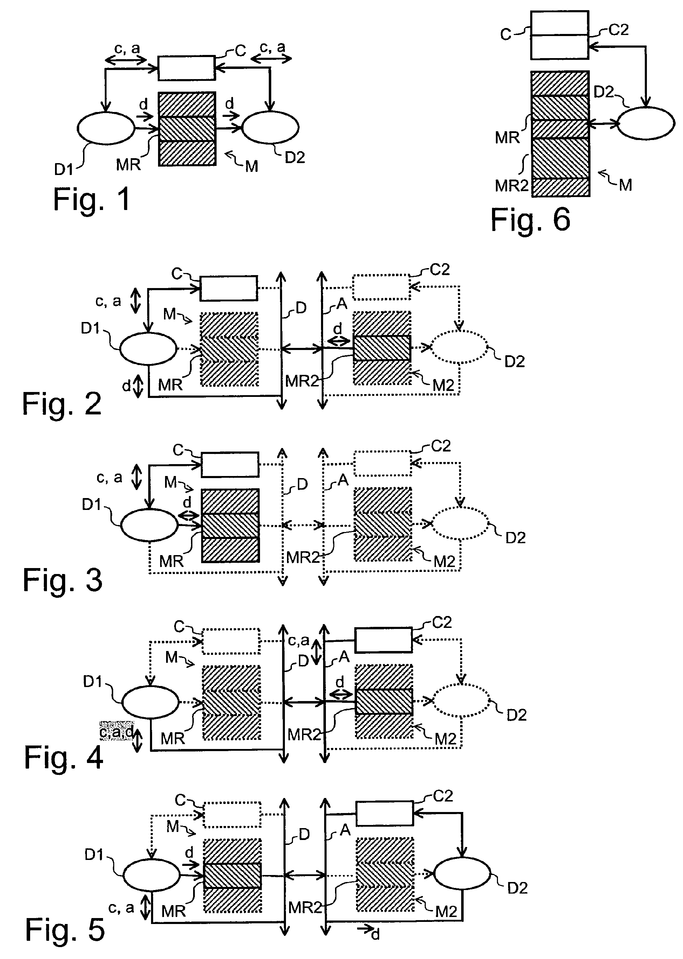

Bei der anhand Fig. 1 dargestellten Ausführungsform wird die erste der Einheiten durch eine erste Einheit D1 ausgebildet, welche die Daten d bereitstellt und zumindest über einen Schreibanschluss an die Speichereinrichtung MR anlegt. Die zweite der Einheiten wird durch eine zweite Einheit D2 ausgebildet, welche zumindest einen Leseanschluss aufweist und die Daten d aus der Speichereinrichtung MR ausliest. Für die Verwaltung des Speicherzugriffs kommunizieren die erste und die zweite Einheit D1, D2 über separate Kommunikationsverbindungen, insbesondere über einen Adressbus direkt mit der Speichersteuereinrichtung C. Über diese Kommunikationsverbindung werden Steueranweisungen und bei Bedarf Adressen signalisiert. Insbesondere teilt die Steuereinrichtung C den beiden Einheiten D1, D2 jeweils die für diese Einheiten zuständige Adresse a für einen Zugriff auf die Speichereinrichtung MR mit. Außerdem werden gegebenenfalls zusätzliche Informationen in Form beispielsweise einer Anzahl zu schreibender bzw. zu lesender Daten in Form von Steueranweisungen c über diese Kommunikationsverbindung übermittelt. Die erste und die zweite Einheit D1, D2 greifen entsprechend selber direkt auf den durch die Adresse a mitgeteilten Speicherbereich innerhalb der Speichereinrichtung MR zu.

Anhand der Fig. 2 - 6 sind modifizierte Anordnungen dargestellt, wobei nachfolgend im Wesentlichen lediglich Unterschiede zu Fig. 1 beschrieben werden. Mit gleichen Bezugszeichen versehene Komponenten und Funktionen sind gleich bzw. gleich wirkend zu denen gemäß der übrigen beschriebenen Figuren, sofern nicht weitere oder andere Aspekte diesbezüglich beschrieben werden. Komponenten, welche für das Verständnis der jeweiligen Ausführungsform von untergeordneter Bedeutung oder nicht relevant sind, sind zur Erzielung einer übersichtlicheren Darstellung mit punktierten Linien skizziert. Gegebenenfalls können insbesondere solche Komponenten in modifizierten Ausführungsformen auch ganz entfallen.

Anhand Fig. 2 und 3 ist eine Ausführungsform beschrieben, bei welcher eine Speicherhierarchie verwendet wird. Dadurch können mehrere gegebenenfalls unterschiedlich große Speicherbereiche als Speichereinrichtungen in dem System bereitgestellt und unterschiedlich schnell adressiert werden. Ermöglicht wird somit eine so genannte Lokalität. Die FIFO-Speichersteuereinrichtung C kann FIFO-Daten in Form der Daten d in allen Speichern M bzw. Speichereinrichtungen MR, MR2 unterschiedlicher Lokalität konfliktfrei verwalten. Dabei ist relativ zur jeweils anfordernden ersten und/oder zweiten Einheit D1, D2 ein unterschiedlich schneller Zugriff möglich.

Als Speichereinrichtung MR, MR2 für die Daten d, welche als FIFO-Daten zu schreiben und zu lesen sind, kann somit ein beliebiger Speicherbereich mit wahlfreiem Zugriff verwendet werden. Für eingebettete Systeme sind das z. B. gemeinsam zugreifbare SRAM-Blöcke (SRAM: Statisches RAM) oder ein gemeinsam verwendetes externes DRAM (DRAM: Dynamisches RAM). Prinzipiell ist es aber ebenso möglich, in einem anderen System, z. B. einer Festplatte oder sogar einem verteilten Speicher in einem Netzwerk Speicherbereiche als eine oder mehrere Speichereinrichtungen für die Speicherung der FIFO-Daten zu verwenden.

Entsprechend ist in Fig. 2 ein erster Speicher M in einem ersten Systembereich und ein zweiter Speicher M2 in einem zweiten Systembereich dargestellt. Beide Speicher sind jeweils mit einem gemeinsam verwendeten Datenbus D und mit einem gemeinsam verwendeten Adressbus A verbunden. In jedem der Systembereiche ist vorzugsweise eine eigene Speichersteuereinrichtung C, C2 bereitgestellt. Die erste Einheit D1 greift über eine Kommunikationsverbindung zum Austausch von Adressen a und sonstigen Steueranweisungen c auf die erste Speichersteuereinrichtung C in ihrem eigenen ersten Systemabschnitt zu. Außerdem hat die erste Einheit D1 eine Verbindung über den oder die Busse D, A, um Daten d als FIFO-Daten zu der zweiten Speichereinrichtung MR2 im zweiten Systemabschnitt zu übertragen. Die Speichersteuereinrichtung C im ersten Systemabschnitt verwaltet somit als lokale FIFO-Speichersteuereinrichtung einen hierarchisch angeordneten Speicher mit der zweiten Speichereinrichtung MR2.

Fig. 3 zeigt eine Ausführungsform, welche im Wesentlichen der Ausführungsform gemäß Fig. 1 entspricht. Eine aus Sicht der ersten Einheit D1, welche die Daten d bereitstellt, lokale FI-FO-Steuereinheit in Form der Speichersteuereinrichtung C dient zu Verwaltung der Speichereinrichtung MR im gleichen Systemabschnitt, in welchem sich auch die erste Einheit D1 befindet. Ein lokaler Speicher M bzw. eine darin zugewiesene lokale Speichereinrichtung MR wird somit mit einer lokalen Speichersteuereinrichtung C verwaltet.

Fig. 4 zeigt eine Ausführungsform mit aus Sicht der die Daten verarbeitenden, insbesondere bereitstellenden ersten Einheit D1, wobei sowohl die Speichersteuereinrichtung C2 als auch die Speichereinrichtung MR2 in dem zweiten Systemabschnitt für die FIFO-Datenspeicherung der Daten d verwendet wird. Dabei kann diese erste Einheit D1 je nach Ausgestaltung des Systems wahlweise nur auf diese Speichersteuereinrichtung C2 als eine zweite Speichersteuereinrichtung oder die erste Speichersteuereinrichtung C im eigenen Systemabschnitt zugreifen, oder die erste Einheit D1 kann gegebenenfalls auch nur auf diese zweite Speichersteuereinrichtung C2 im anderen Systemabschnitt zugreifen, falls beispielsweise im eigenen Systembereich keine geeignete Speichersteuereinrichtung C existieren sollte.

Fig. 5 zeigt eine Modifikation der Ausführungsform, bei welcher die erste Einheit D1 zum FIFO-Speichern ihrer Daten d die erste Speichereinrichtung MR im ersten Speicher M des eigenen Systembereichs verwendet. Für die Verwaltung dieses ersten Speicherbereichs MR greift die erste Einheit D1 jedoch auf eine Speichersteuereinrichtung in Form der zweiten Speichersteuereinrichtung C2 im anderen Systembereich zu. Die Übertragung von Adressen a und sonstigen Steueranweisungen c erfolgt somit über die Kommunikationsverbindung mit vorzugsweise einem zwischengeschalteten Bussystem aus den Bussen D, A.

Während anhand der Fig. 2 - 5 verschiedene Modifikationen skizziert sind, bei welchen die einzelnen Komponenten über verschiedene Systembereiche oder gegebenenfalls sogar voneinander getrennte Systeme verteilt sein können, zeigt Fig. 6 eine weiter modifizierte Ausführungsform, bei welcher in einem Systembereich mehrere Speichersteuereinrichtungen C, C2 und mehrere Speichereinrichtungen MR, MR2 für eine FIFO-Speicherung von Daten angeordnet sind. Natürlich ist auch eine Kombination der verschiedenen Ausführungsformen möglich, so dass beispielsweise in verschiedenen Systembereichen oder Systemen mehrere derartige Speichereinrichtungen MR, MR2 und/oder mehrere Speichersteuereinrichtungen vorgesehen sein können.

Wie dies aus Fig. 6 ersichtlich ist, ist die FIFO-Architektur vorzugsweise skalierbar. Mehrere FIFO-Speichereinrichtungen in einem Speicher M werden durch mehrere Speichersteuereinrichtungen C, C2 gebildet. Die Anzahl dieser mehreren Speichersteuereinrichtungen C, C2 wird vorzugsweise bereits im Rahmen des Schaltungsentwurfs vorgesehen. Eine solche Architektur ist dabei jedoch völlig unabhängig von der Anzahl und Größe der physikalischen Datenspeicher M, welche für die FIFO-Daten verwendet werden.

Die FIFO-Datengröße wird als Dimension für jede einzelne der Speichereinrichtungen MR, MR2 bzw. für jeden entsprechenden Dateneintrag in der zugeordneten FIFO-Speichersteuereinrichtung in Form der Speichersteuereinrichtungen C, C2 festgelegt. Insbesondere ist die Dimension entsprechend nicht zwingend statisch und auch nicht zwingend auf die Größe der Datenelemente des physikalischen Speichers M beschränkt.

Im Fall des Zugriffs auf eine solche Speichersteuereinrichtung C, C2 über ein hierarchisches Bussystem mit entsprechenden Bussen D, A kann die Position der entsprechenden Speichereinrichtung MR bzw. MR2 beliebig gewählt werden. Die Position in der Hierarchie bestimmt jeweils die Zugriffsgeschwindigkeit der schreibenden und der lesenden Einheit D1, D2 auf die Speichersteuereinrichtung C, C2.

Die Speichersteuereinrichtung C, C2 der verschiedenen dargestellten Ausführungsformen verwaltet Adressen a zum Schreiben in die zugeordnete Speichereinrichtung MR bzw. MR2 und zum Lesen aus dieser Speichereinrichtung MR bzw. MR2 und übergibt diese Adressen a an die entsprechende erste oder zweite Einheit D1, D2. Die Daten d selbst werden von der ersten Einheit D1 oder optional auch der zweiten Einheit D2 direkt in die derart adressierte Speichereinrichtung MR, MR2 geschrieben bzw. aus der adressierten Speichereinrichtung MR, MR2 gelesen.

Um dies durchzuführen, erfragt die entsprechende Daten d zum Schreiben bereitstellende bzw. zum Lesen anfordernde Einheit D1, D2 von der zuständigen Speichersteuereinrichtung C für die FIFO-Speicherung die Adresse a, zu welcher die Daten d geschrieben werden müssen bzw. von welcher die Daten d gelesen werden müssen. Erhält die Einheit D1, D2, welche die Adresse a anfordert, keine gültige Adresse zurück, greift sie nicht auf die entsprechende Speichereinrichtung MR, MR2 zu. Die Speichersteuereinrichtung C, C2 kann dadurch einen Zugriff auf die zugeordnete Speichereinrichtung MR, MR2 verhindern, wenn beispielsweise der für die FIFO-Speicherung zugeordnete Speicherbereich der Speichereinrichtung MR, MR2 voll ist oder falls bei einer Leseanforderung keine Daten in der Speichereinrichtung MR, MR2 verfügbar sind. Dadurch wird ein konsistenter Zugriff von sendenden bzw. empfangenden Einheiten D1, D2 sichergestellt.

Nach dem Schreiben bzw. Lesen der Daten d teilt die lesende bzw. schreibende Einheit D1, D2 der für die FIFO-Speicherung zuständigen Speichersteuereinrichtung C, C2 den Abschluss des Zugriffs auf die Speichereinrichtung MR, MR2 mit. Ab diesem Zeitpunkt kann das Auslesen der Daten d durch die zweite Einheit D2 als einem Empfänger bzw. das Überschreiben alter Daten durch die erste Einheit D1 als einem Sender von der Speichersteuereinrichtung C, C2 zugelassen werden.

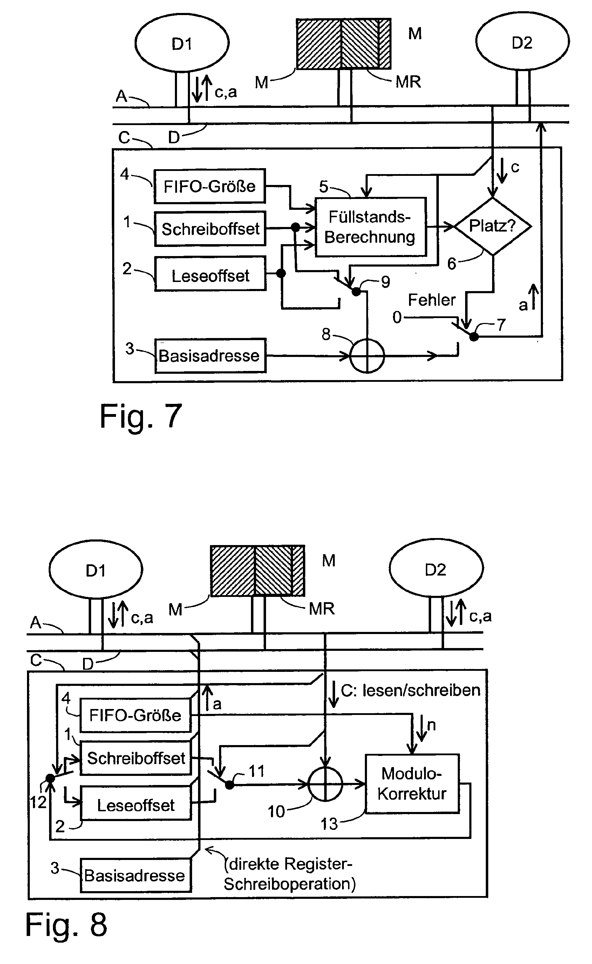

Fig. 7 skizziert beispielhaft einen Aufbau und Funktionen der Speichersteuereinrichtung C. Dargestellt sind verwendete Register und Operationen bei einem Lesezugriff auf eine Speichereinrichtung MR durch beispielsweise die zweite Einheit D2. Die Register und Operationen dienen dabei zum Berechnen der nächsten Lese- bzw. Schreibadresse in Verbindung mit der FIFO-Speicherung.

Die Speichersteuereinrichtung C umfasst eine Speichereinheit 1 für die aktuelle Schreibadresse und eine Speichereinheit 2 für die aktuelle Leseadresse. Dabei können die in den Speichereinheiten 1, 2 gespeicherten Adressen als zwei vollständige Adressen hinterlegt sein. Zusätzlich oder alternativ können eine Basisadresse in einer Speichereinheit 3 für die Basisadresse und die beiden ersten Speichereinheiten 1, 2 als Speichereinheiten zum Speichern eines Schreib- bzw. Lese-Offsets realisiert sein.

Außerdem weist die Speichersteuereinrichtung C eine vierte Speichereinheit 4 zum Speichern der Größe n des Speicherbereichs der Speichereinrichtung MR auf. Diese Größe n wird verwendet, um die Adressen a beim Erreichen des FIFO-Endes wieder auf den Anfang zurückzusetzen. Außerdem wird die Größe n verwendet, um die Anzahl von benutzten und freien FIFO-Zellen in der Speichereinrichtung MR zu ermitteln.

Zur Berechnung des Füllstands weist die Speichersteuereinrichtung C eine Logik auf, welche eine Füllstands-Berechnungseinheit aufweist. Diese Füllstands-Berechnungseinheit bekommt die Werte des Schreib-Offsets, des Lese-Offsets und der Größe n angelegt. Außerdem wird der Füllstands-Berechnungseinheit eine entsprechende Steueranweisung von der anfordernden Einheit D1, D2 angelegt. Die Zugriffsanweisung, welche vorzugsweise bei der Anforderung einer Schreiboperation auch die Anzahl der erforderlichen Speicherzellen umfasst, wird auch einer in der Logik enthaltenen Platzbestimmungseinheit 6 angelegt, welche den angeforderten Speicherbedarf mit dem von der Füllstands-Berechnungseinheit 5 berechneten verfügbaren Speicherplatz vergleicht. Ist ausreichend Speicherplatz vorhanden, wird mittels einer Schalteinrichtung 7 die Adresse a für die entsprechende Schreiboperation auf den Adressbus A bzw. entsprechende Adressleitungen ausgegeben und der ersten Einheit D1 mitgeteilt. Die erste Einheit D1 kann daraufhin direkt auf die mit dieser Adresse a adressierte Speichereinrichtung MR zugreifen und ihre Daten d dort speichern. Falls der Platz in der Speichereinrichtung MR nicht ausreicht, wird ein Fehlersignal und/oder eine ungültige Adresse, beispielsweise die Adresse "0" ausgegeben, so dass die erste Einheit D1 die angeforderte Schreiboperation nicht durchführt.

Bei der skizzierten Ausführungsform wird der Schalteinrichtung 7 als Adresse a eine Adresse angelegt, welche durch Addition der Basisadresse und entweder des Schreib-Offsets oder des Lese-Offsets gebildet wird. Beispielsweise kann die Addition durch einen Addierer 8 durchgeführt werden, welcher zwischen die Speichereinheit 3 für die Basisadresse und eine weitere Schalteinrichtung 9 geschaltet ist. Dabei legt die weitere Schalteinrichtung 9 wahlweise den Schreib-Offset oder den Lese-Offset aus der ersten bzw. zweiten Speichereinheit 1, 2 an. Diese weitere Schalteinrichtung 9 wird vorzugsweise mit der Steueranweisung c geschaltet, welche auch der Füllstands-Berechnungseinheit angelegt wird. Die Steueranweisung c umfasst somit eigenständig vorteilhaft sowohl eine Information über eine angeforderte Schreib- oder Leseoperation als auch eine Information über den erforderlichen Speicherbedarf in der Speichereinrichtung MR.

Fig. 8 skizziert verwendete Register und Operationen einer solchen Speichersteuereinrichtung C, wobei ein angeforderter Schreibzugriff zum Updaten des FIFO-Zustandes oder bei einem direkten Register-Schreiben dargestellt ist. Verwendet werden dabei wieder die vier Speichereinheiten 1 - 4 für Schreib-Offset, Lese-Offset, Basisadresse und die FIFO-Größe. Mittels einer Steueranweisung c wird wiederum von der ersten oder der zweiten Einheit D1, D2 eine Lese- oder Schreiboperation angefordert. Die Steueranweisung wird dabei sowohl einem weiteren Addierer 10, als auch einer dritten und einer vierten Schalteinrichtung 11, 12 angelegt. Mittels der dritten und der vierten Schalteinrichtung 11, 12 wird wiederum ein Zugriff auf entweder den Schreib-Offset oder den Lese-Offset in der ersten bzw. der zweiten Speichereinheit 1, 2 geschaltet. Dem entweder Schreib-Offset oder Lese-Offset wird mittels des Addierers 10 der Wert des angeforderten Speicherplatzes aufaddiert. Das Additionsergebnis wird einer Modulo-Korrektureinheit 13 angelegt, welcher außerdem die Größe n aus der Speichereinheit 4 für die FIFO-Größe angelegt wird. Das Ergebnis der Modulo-Korrektureinheit 13 wird über die vierte Schalteinrichtung 12 wieder in entsprechend die erste oder in die zweite Speichereinheit 1, 2 für entweder den Schreib-Offset oder den Lese-Offset gespeichert. Vorgesehen sein können außerdem Leitungen und/oder ein Bus, welche an die vier Speichereinheiten 1 - 4 geschaltet sind, um direkte Register-Schreiboperationen zu ermöglichen.

Die diversen Einheiten der Fig. 7 und 8 können sowohl als bauliche Komponenten als auch als logische Verfahrens-Ablaufschritte eines Prozessors einschließlich eines Softwareprogramms in einem Prozessor umgesetzt werden. Insbesondere weist eine solche Speichersteuereinrichtung C vorzugsweise sämtliche Komponenten und Fähigkeiten sowohl zum Durchführen der Operationen gemäß sowohl Fig. 7 als auch Fig. 8 auf.

Die Kommunikation der schreibenden und lesenden Verarbeitungseinheiten in Form der beispielsweise ersten und/oder zweiten Einheit D1, D2 mit der als FIFO-Kontrolleinheit dienenden Speichersteuereinrichtung C kann im Falle einer programmierbaren Einheit sehr effizient durch Abbilden der Steuer- bzw. Kontrollzugriffe in deren Speicher-Adressraum erfolgen. Dabei kann über die Adressleitungen bzw. einen Adressbus A signalisiert werden, ob Werte in die Speichereinrichtung MR geschrieben oder aus der Speichereinrichtung MR gelesen werden sollen. Außerdem kann über diese Adressleitungen bzw. den Adressbus A vorzugsweise auch die Anzahl der zu schreibenden bzw. der zu lesenden Werte mittels entsprechender Steueranweisungen c signalisiert werden.

Um die Adresse a zu erhalten, an der die nächsten FIFO-Werte geschrieben bzw. gelesen werden können, ist mit einer solchen Anordnung und Verfahrensweise vorteilhaft nur eine einzige Leseoperation erforderlich. Auch zum Signalisieren, dass das Schreiben bzw. Lesen abgeschlossen ist, ist entsprechend eine einzige Schreiboperation erforderlich.

Bei dem beschriebenen Beispiel hat beim Zugriff auf die Speichersteuereinrichtung C für die FIFO-Speicherung die Art des Zugriffs, das heißt lesend oder schreibend, nichts mit der Selektion zu tun, ob Daten d in die Speichereinrichtung MR geschrieben oder aus dieser gelesen werden sollen. Dies geschieht vorzugsweise über ein Selektions-Bit in der Adresse a.

Vorteilhafterweise ist auch eine direkte Verbindung der Signale des Steuerblocks der Speichersteuereinrichtung C mit einem Hardwareblock möglich.

Gemäß einem bevorzugten verfahrensgemäßen Ablauf führt die z. B. erste Einheit D zum Schreiben einen Kontroll-Lese-Zugriff aus, um eine Anzahl von FIFO-Zellen der Speichereinrichtung MR zum Beschreiben zu reservieren. Dieser Zugriff durch die erste Einheit D1 erfolgt vorzugsweise durch das Anlegen einer entsprechenden Steueranweisung c über eine direkte Kommunikationsverbindung an die Speichersteuereinrichtung C.

Die Speichersteuereinrichtung C prüft für die angeforderte FI-FO-Speicherung, ob noch mindestens so viele Speicherzellen in der Speichereinrichtung MR frei sind, wie von der ersten Einheit D1 angefordert wird, und gibt gegebenenfalls die Adresse a der ersten FIFO-Zelle in dem Speicherbereich der Speichereinrichtung MR zurück. Falls weniger als die erforderliche Anzahl von Zellen verfügbar ist, wird dies vorzugsweise durch einen speziellen Rückgabewert anstelle einer Speicheradresse signalisiert.

Vorzugsweise wird über die Adressleitungen bzw. den Adressbus A von der erste Einheit D1 an die Speichersteuereinrichtung C signalisiert, dass Werte bzw. die Daten d geschrieben werden sollen, wobei vorzugsweise auch die Anzahl der zu schreibenden Daten d signalisiert wird.

Das Schreiben der Daten d geschieht an der von der Speichersteuereinrichtung C zurückgegebenen Adresse a in einem separaten Speicherbereich für die Daten d selbst. Nach dem Schreiben der Daten d in die Speichereinrichtung MR wird das Ende des Schreibens der Speichersteuereinrichtung C vorzugsweise durch einen zweiten Kontroll-Schreib-Zugriff durch Übertragung einer erneuten Steueranweisung c mitgeteilt. Die Speichersteuereinrichtung C kann daraufhin die soeben in die Speichereinrichtung MR eingeschriebenen Daten d zum FIFO-Auslesen freigeben.

Die lesende Einheit, beispielsweise die zweite Einheit D2, fragt durch einen Kontroll-Lese-Zugriff durch beispielsweise Anlegen einer entsprechenden Steueranweisung c von der Speichersteuereinrichtung C ab, ob mindestens n-Zellen im FIFO-Speicherbereich der Speichereinrichtung MR vorhanden sind. Die Speichersteuereinrichtung gibt im gegebenen Fall die Adresse a der ersten Zelle zurück, falls die Daten d verfügbar sind. Anderenfalls gibt die Speichersteuereinrichtung C eine Fehlersignalisierung oder einen speziellen Rückgabewert zurück.

Vorzugsweise wird über die Adressleitungen bzw. den Adressbus A von der zweiten Einheit D2 an die Speichersteuereinrichtung C signalisiert, dass Werte bzw. die Daten d gelesen werden sollen, wobei vorzugsweise auch die Anzahl der zu lesenden Daten d signalisiert wird.

Falls Daten d verfügbar sind, liest die zweite Einheit D2 daraufhin die Daten d ab der zurückgegebenen Adresse a aus der Speichereinrichtung MR, welche in dem separaten Speicher M ausgebildet ist.

Nach dem Lesen der Daten d wird das Ende des Lesens der Speichersteuereinrichtung C durch einen zweiten Kontroll-Lese-Zugriff von der zweiten Einheit D2 mitgeteilt, so dass der freigewordene Speicherbereich in der Speichereinrichtung MR für neue ankommende Daten verwendet werden kann.

## Patentansprüche

1. Speicherverwaltungs-Schaltungsanordnung mit
- einer Speichereinrichtung (MR; MR, MR2), welche ansteuerbar ist zuerst eingegebene Daten (d) zuerst auszugeben, und
- einer der Speichereinrichtung (MR; MR, MR2) zugeordneten Speichersteuereinrichtung (C) zum Steuern des Eingebens der Daten (d) aus einer die Daten (d) bereitstellenden Einheit (D1) in die Speichereinrichtung (MR; MR, MR2) und zum Steuern des Ausgebens der Daten (d) aus der Speichereinrichtung (MR; MR, MR2) zu einer die Daten (d) empfangenden Einheit (D2),
**dadurch gekennzeichnet , dass**
- die Speichersteuereinrichtung (C) und die Speichereinrichtung (MR; MR, MR2) in der Schaltungsanordnung als physikalisch getrennte Komponenten angeordnet sind und
- die Speichersteuereinrichtung (C) zum Steuern des Eingebens der Daten (d) und zum Steuern des Ausgebens der Daten (d) mit der oder den die Daten (d) bereitstellenden und die Daten (d) empfangenden Einheit (D1, D2) verbunden ist.

2. Speicherverwaltungs-Schaltungsanordnung nach Anspruch 1, bei der die Speichersteuereinrichtung (C) und die Speichereinrichtung (MR; MR, MR2) in der Schaltungsanordnung als physikalisch baulich getrennte Komponenten angeordnet sind_{[h3]}.

3. Speicherverwaltungs-Schaltungsanordnung nach Anspruch 1 oder 2, bei der die Speichersteuereinrichtung (C) und die Speichereinrichtung (MR; MR, MR2) zum Steuern des Eingebens der Daten (d) und zum Steuern des Ausgebens der Daten (d) nicht miteinander verbunden sind.

4. Speicherverwaltungs-Schaltungsanordnung nach einem vorstehenden Anspruch, bei der die Speichersteuereinrichtung (C) mit der die Daten (d) bereitstellenden Einheit (D1) und/oder mit der die Daten (d) empfangenden Einheit (D2) über einen Bus zum Übertragen einer Speicheradresse (a) für einen Zugriff der die Daten (d) bereitstellenden Einheit (D1) und/oder der die Daten (d) empfangenden Einheit (D2) auf die Speichereinrichtung (MR; MR, MR2) verbunden ist.

5. Speicherverwaltungs-Schaltungsanordnung nach einem vorstehenden Anspruch, bei der die Daten (d) bereitstellende Einheit (D1) und/oder die Daten (d) empfangende Einheit (D2) die Anzahl der zu schreibenden bzw. lesenden Daten (d) und/oder die Richtung des Datentransfers and die Speichersteuereinrichtung (C) über einen Teil der Adresse auf dem Adressbus signalisiert.

6. Speicherverwaltungs-Schaltungsanordnung nach einem vorstehenden Anspruch, bei der die Speichereinrichtung (MR; MR, MR2) einen Schreibanschluss zum Eingeben der Daten (d) von der die Daten (d) bereitstellenden Einheit (D1) als einer ersten Einheit und einen Ausleseanschluss zum Ausgeben der Daten (d) an die Daten (d) empfangende Einheit (D2) als einer zweiten Einheit aufweist.

7. Speicherverwaltungs-Schaltungsanordnung nach einem vorstehenden Anspruch, bei der die Speichersteuereinrichtung (C) eine Speichereinheit (1; 3) zum Speichern einer Adresse des zugeordneten Speicherbereichs der Speichereinrichtung (MR) in einem übergeordneten Speicher (M) aufweist.

8. Speicherverwaltungs-Schaltungsanordnung nach einem vorstehenden Anspruch, bei der die Speichersteuereinrichtung (C) eine Speichereinheit (4) zum Speichern einer Größe des zugeordneten Speicherbereichs der Speichereinrichtung (MR) aufweist.

9. Speicherverwaltungsverfahren zum Verwalten einer Speichereinrichtung (MR; MR, MR2), welche ansteuerbar ist zuerst eingegebene Daten (d) zuerst auszugeben, mittels einer der Speichereinrichtung (MR; MR, MR2) zugeordneten Speichersteuereinrichtung (C), wobei ein Eingeben der Daten (d) aus einer die Daten (d) bereitstellenden Einheit (D1) in die Speichereinrichtung (MR; MR, MR2) gesteuert wird und ein Ausgeben der Daten (d) aus der Speichereinrichtung (MR; MR, MR2) zu einer die Daten (d) empfangenden Einheit (D2) gesteuert wird,
**dadurch gekennzeichnet , dass**
- mittels der Speichersteuereinrichtung (C) als einer von der Speichereinrichtung (MR; MR, MR2) in der Schaltungsanordnung physikalisch getrennten Komponente direkt die Daten (d) bereitstellende und/oder die Daten (d) empfangende Einheit (D1, D2) angesteuert wird zum Steuern des Eingebens der Daten (d) in die Speichereinrichtung (MR; MR, MR2) bzw. zum Steuern des Ausgebens der Daten (d) aus der Speichereinrichtung (MR; MR, MR2).

10. Speicherverwaltungsverfahren nach Anspruch 9, bei dem die Speichereinrichtung (MR; MR, MR2) von der Speichersteuereinrichtung (C) nicht direkt angesteuert wird.

11. Speicherverwaltungsverfahren nach Anspruch 9 oder 10, bei dem für einen Zugriff der die Daten (d) bereitstellenden Einheit (D1) und/oder der die Daten (d) empfangenden Einheit (D2) auf die Speichereinrichtung (MR; MR, MR2) die Speichersteuereinrichtung (C) eine Speicheradresse (a) an der die Daten (d) bereitstellenden Einheit (D1) und/oder an der die Daten (d) empfangenden Einheit (D2) anlegt.

12. Speicherverwaltungsverfahren nach Anspruch 11, bei dem die Daten (d) bereitstellende Einheit (D1) und/oder die Daten (d) empfangende Einheit (D2) auf die Speichereinrichtung (MR; MR, MR2) an der Speicheradresse (a) der Speichereinrichtung (MR; MR, MR2) zugreift.

13. Speicherverwaltungsverfahren nach einem der Ansprüche 9 bis 12, bei dem für die Verwaltung des Speicherzugriffs die Daten (d) bereitstellende Einheit (D1) und/oder die Daten (d) empfangende Einheit (D2) über separate Kommunikationsverbindungen direkt mit der Speichersteuereinrichtung (C) kommunizieren.

14. Speicherverwaltungsverfahren nach einem der Ansprüche 9 bis 13, bei dem die Speichereinrichtung skalierbar ist zum wahlweise dimensioniert großen Belegen eines Speicherbereichs innerhalb eines übergeordneten Speichers (M) zum Bereitstellen der Speichereinrichtung (MR).

15. Speicherverwaltungsverfahren nach einem der Ansprüche 9 bis 14, bei dem die Speichereinrichtung (MR) in einem übergeordneten Speicher (M) temporär bereitgestellt wird.

16. Speicherverwaltungsverfahren nach einem der Ansprüche 9 bis 15 zum Ansteuern einer Speicherverwaltungs-Schaltungsanordnung nach einem der Ansprüche 1 bis 7.

17. Speicherverwaltungsverfahren nach einem der Ansprüche 9 bis 16, **dadurch gekennzeichnet , dass** die Speichersteuereinrichtung (C) die Übertragung der Daten so steuert, dass zuerst eingegebene Daten (d) zuerst wieder ausgegeben werden.
